# EUROPEAN PATENT APPLICATION

(11) **EP 2 958 331 A1**
(43) Date of publication of application: **23.12.2015**
(21) Application number: 14172709.9
(22) Date of filing: 17.06.2014
(51) Int. Cl.: H04N 21/2343, H04N 21/262, H04N 21/266, H04N 21/438, H04N 21/845

(54) **A dynamic adaptive streaming digital media content receiver**

(71) Applicant: Nagravision S.A., 1033 Cheseaux-sur-Lausanne (CH)
(72) Inventor: Burckard, Antoine, 78180 Montigny le Bretonneux (FR)
(74) Representative: Leman Consulting S.A.

(57) **Abstract**

In view of problems presented by the state of the art in terms of making available the necessary keys to access the different representations of media content during dynamic adaptive streaming of said media content, the present invention provides for a method for making the keys available to users who have the necessary rights in time for the key to be used to decrypt the content.

## Description

### TECHNICAL FIELD

The present invention pertains to the domain of dynamic adaptive streaming of media content over a network. The invention provides advantages in particular when such content is encrypted.

### BACKGROUND ART

Adaptive streaming or dynamic adaptive streaming enables streaming of media content over a network, usually over the Internet for example, taking into account a currently available transmission bandwidth. Transmission bandwidth may vary over time and so the available bandwidth is assessed at intervals during the transmission so that maximum use of the currently available bandwidth can be made. As more bandwidth becomes available, the quality of the transmitted media content in terms of bit-rate or resolution may be increased, while as less bandwidth becomes available the quality is reduced.

This is usually achieved by preparing different representations of a piece of media content so that at transmission time the representation which best corresponds to the currently available bandwidth may be selected at the reception side. By representation it is meant a version of the content which has been prepared at a certain bit-rate or resolution or at a certain compression rate. In the state of the art of adaptive streaming it is generally known that different representations of a particular content are characterised by a different resolution and bit rate. Different resolution and bit rate for different representations therefore lead to different versions of the same content, each version having a different quality. The higher bit-rates give higher quality rendition of the content but require more bandwidth to transmit and vice versa. For the purpose of removing any ambiguity associated with the word "representation", the term "quality representation" may be used to remind the reader that the term relates to the domain of adaptive streaming and not a watermarking domain for example, where different representations of a content may exist, each representation characterised by a different watermark rather that a different quality.

Examples of known dynamic adaptive streaming standards include HTTP Live Streaming (HLS) and Dynamic Adaptive Streaming over HTTP (DASH), the latter also being known as MPEG-DASH.

The media content is made available from a streaming server on which different representations of the content are stored. Each representation is broken into a series of chunks of content, each chunk containing a short interval of playback time of a content which may be of several hours in duration. The chunks are arranged such that equivalent chunks in each representation are aligned, that is the short interval covered by the chunk is aligned from one representation to another so that if a chunk from one representation is played to the end and then a switch to a different representation is made, then the following chunk in the next representation will begin at the point where the end of the previous chunk left off. In other words chunks from all representation start at the same place and end at another same place. In this manner it is easy to switch from chunk to chunk at the alignment points when it is required to change from one representation to another. As the content is played back by a client, the client automatically selects the content from the appropriate representation based on current network conditions in terms of available bandwidth. Preferably the client selects the chunk with the highest bit-rate or resolution that can be downloaded in time for playback without causing stalls or re-buffering events during playback. In this manner an MPEG-DASH client can seamlessly adapt to changing network conditions thus providing high quality playback without stalling.

Where media content may be of commercial value, a fee may be perceived by the owner of such content from a user who chooses to view or otherwise render the content. In such cases it is known to employ digital rights management (DRM) techniques wherein access to the content is allowed only to those users who have paid a fee. Enforcement is made possible through encryption of the content under a key and by only making the key available to those users who have paid.

A basic digital rights management scheme may be described as the specification of usage permissions pertaining to content to be protected and then ensuring that the content is only rendered in accordance with those permissions. The content is encrypted under a content key. The content key itself is also encrypted and bundled with the permissions into a so-called license or rights object. The encrypted content and the corresponding license are usually associated with each other using unique content identifiers. Generally the whole content is encrypted under the same key as opposed to the changing control word policy which is generally used within the TV broadcast domain. The problem is to ensure that only the intended receiver can access and use the license. This is usually done using a trusted key server. The user must make a request to the key server for the content key. The key server checks that the user is entitled to access the content, in which case it gives the user access to the key, thereby giving the user access to the content. Depending on the transport format used, this key may be known as either a content key or a control word.

Business models now exist which allow content owners to leverage revenue generated from their content by taking advantage of the fact that some users are willing to pay more for higher quality content. In these so called pay-per-quality models, access to higher quality representations of a content - i.e. representations corresponding to higher bit-rates or higher resolutions of the content - is possible for a higher fee. For the user who pays the highest fee, provision is made to allow the adaptive streaming function to access all representations including highest quality and all lower qualities, while access to the higher qualities is excluded for those users who choose to pay a smaller fee. So for those users who choose to pay the highest fee their adaptive streaming clients are allowed to download representations which provide the highest quality rendering of the content that the network permits at any given time while those who choose to pay a lower fee will find their adaptive streaming clients limited in the choice of representations available to them even if the network permits for a better quality representation to be transmitted.

A problem exists whereby if each of the representations of a media content is encrypted under a different key, which would be the case in the above mentioned business model for example, then the client has to obtain the new key each time a switch is made from one representation to the next during the adaptive streaming process. This may cause stalling in the case where the new key was not made available in time to decrypt the content from the new representation for example. Stalling during playback of streaming content is hardly desirable, especially in the business model described above where a user may have chosen to pay higher fees in order to have access to the best quality representations.

The problem of each representation being encrypted under a different key can become further confounded when different portions within each representation are encrypted with different keys. This is sometimes known as short-lived keys, where within one representation, the encryption key changes with time. It is known for content distributed using known pay-TV models to have short-lived encryption keys. Another example of short-lived keys is described in United States Patent Application Publication number 2012/0114118 A1, which discloses a system of key rotation in the domain of live adaptive streaming, designed to provide increased security.

At the Multimedia Systems Conference in February, 2011 in San Jose, Hartung, Kesici and Catrein disclosed, in a paper entitled DRM Protected Dynamic Adaptive HTTP Streaming (hereinafter referred to as Hartung), a series of features to be added on top of the DASH standard to provide enablement for complex cases of DRM content protection schemes (such as pay-per-maximum-quality or simply pay-per-quality), as well as a new method for structuring keys and licenses. The methods disclosed by Hartung however, while they do allow for a user to derive keys for different representations, they do not provide for seamless switching from one representation to another during playing of one particular content when each representation comprises short-lived keys which are different from the short-lived keys in another representation. In other words Hartung does not address the problems with true dynamic adaptive streaming where each representation has different short-lived keys.

### BRIEF DESCRIPTION OF THE INVENTION

The present invention is aimed at solving some of the problems described above in the prior art. According to one embodiment of the present invention, where delivery of encrypted content (for example via MPEG2 Transport Stream format or ISOBMFF format) is made via dynamic adaptive streaming techniques, the content being encrypted according to an encryption scheme akin to that used in the Pay-TV industry, the problems associated with each representation of the content possibly being encrypted using different keys are resolved. According to another embodiment, problems associated with different digital rights management licenses being required for each of the representations of content being received using dynamic adaptive streaming techniques are also solved. According to yet another embodiment, the problems associated with different digital rights management licenses being required for different parts of a content delivery means being encrypted using different keys are resolved. Examples of content delivery means include, but are not restricted to, MPEG2 Transport Streams or ISOBMFF formatted content files. In the domain of adaptive streaming, the content is organised as a group of different representations of the same content, with each different representation being organised in separate chunks of content, the chunks being aligned between the different representations. From one representation to the next it is the same content which is represented but at different qualities e.g. encoded at different resolutions or bit-rates.

According to an aspect of the present invention, provision is made for a method for allowing decryption of a digital media content, the digital media content provided via a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, at least one chunk within the first of the thus-encrypted representations further comprising information to allow the plurality of chunks within the first of the encrypted representations to be decrypted, the method comprising:
further including, in the first of the thus-encrypted representations, still further information to allow decryption of a plurality of chunks within at least the second of the thus-encrypted representations.

According to a further aspect of the invention, there is provided a method for decrypting a digital media content, the digital media content provided via a set of a plurality of representations, each representation comprising a plurality of chunks, each chunk within its respective representation comprising part of the digital media content represented at a given quality, the given quality being different from one representation to another, a first of the encrypted representations being encrypted under a different key from at least a second of the encrypted representations, the method comprising:
extracting a first information from at least one chunk from the first of the encrypted representations, the first information related to the first of the encrypted representations;
storing the first information in a memory;
extracting a further information from the at least one chunk from the first of the encrypted representations, the further information related to the second of the encrypted representations; and
storing the further information in the memory.

According to yet a further aspect of the invention described herein, there is described an apparatus for encrypting digital media content, the digital media content comprising a set of a plurality of representations, each representation comprising a plurality of chunks, each chunk within its respective representation comprising part of the digital media content represented at a given quality, the given quality being different from one representation to another, the apparatus comprising:
an encryption module for encrypting at least one chunk from each of a plurality of the representations, said encryption being done such that the chunks from at least a first representation is encrypted under a different key from the chunks from at least a second representation; and
an insertion module configured to insert into each encrypted representation, information to allow decryption of its relative encrypted chunks;
characterised in that the insertion module is further configured to insert into at least one encrypted representation, further information to allow decryption of the encrypted chunks from at least one other encrypted representation.

According to another aspect of the invention, disclosure is made with regard to an apparatus for decrypting a digital media content, the digital media content being provided via a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, the apparatus comprising:
a receiver for receiving the content;
an adaptive streaming controller to monitor the bandwidth capability of the receiver and to request the server to send chunks from one or other of the representations depending on the bandwidth capability;
a memory for storing decryption keys; and
a decryption module for decrypting chunks of content;
the apparatus configured to derive a first key from a piece of information extracted from a chunk from a first representation from the plurality of representations and to use the first key to decrypt at least said chunk from the first representation;
the apparatus characterised in that it is further configured at least to derive a second key from a further piece of information extracted from said chunk and to store either the further piece of information or a value derived from the further piece of information in the memory.

According to yet another aspect of the present invention, there is provided a database of a digital media content, the database comprising a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, at least one chunk within the first of the thus-encrypted representations further comprising information to allow the plurality of chunks within the first of the encrypted representations to be decrypted;
characterised in that:
at least the first encrypted representation, further includes information to allow decryption of the plurality of chunks within at least one other encrypted representation.

According to still a further aspect of the present invention, provision is made for a system comprising the previously described receiver and the previously described database, the database preferably residing on a server.

### BRIEF DESCRIPTION OF THE DRAWINGS

The present invention will be better understood thanks to the detailed description which follows and the accompanying drawing, which is given as non-limiting examples of embodiments of the invention, wherein:
Figure 1 illustrates a system in which an embodiment of the present invention may be deployed; and
Figure 2 depicts digital media content organised in a manner which allows for its decryption using methods or apparatus according to embodiments of the present invention.

### DETAILED DESCRIPTION OF THE INVENTION

According to embodiments of the present invention, a system and a method are provided for preventing stalling experienced by a consumer who receives digital media content from a dynamic adaptive streaming server where different representations of the content are encrypted using different keys.

As previously explained, when the dynamic adaptive streaming client allows the user to switch between representations of the content, the fact that a new key needs to be made available to decrypt the new representation may cause the play-out of the content to stall if the key is not supplied in time.

An example of a system in which an embodiment of the present invention may be deployed is a system configured to operate according to an MPEG DASH Standard. The skilled person will understand that the invention will also work in other systems, such as those configured to operate on content based on an ISO base media file format encrypted according to the MPEG CENC method or those configured to operate on content based on MPEG-2 TS format.

According to a first embodiment, the content is encrypted according to a scheme which is similar to schemes which are generally known in the domain of pay-TV broadcast. In this domain, it is usual for content to be transmitted in the form of a transport stream. An example of a transport stream is an MPEG2 transport stream comprising media format encoded in MPEG-2 or H.264, in which the media content is split into transport stream packets. The packets comprise a header and a payload, with the header comprising metadata and the payload comprising the content in encrypted form.

As is customary in the domain of Pay-TV, a transport stream may comprise Entitlement Control Messages (ECM) and Entitlement Management Messages (EMM). ECM are encrypted messages which, when decrypted, yield control words (CW). The CWs are the keys that were used to encrypt the content. An authorised user's reception equipment is able to decrypt the ECM to get the control words. Authorisation is deemed to be given if the user's reception equipment has the necessary rights installed (stored). The necessary rights may be purchased or otherwise acquired via the EMM. EMM are addressable to particular receivers or groups of receivers and they selectively load the necessary rights into the reception devices which have performed whatever act needs to be performed to acquire that right (usually payment). EMM have relatively long validity, for example one month, while ECM change rapidly within a transport stream in order to render difficult the task of a malicious third party seeking to share the CW encrypted therein. CW and ECM may therefore be referred to as short-lived keys.

Embodiments of the present invention will work equally well for content protected by Digital Rights Management (DRM) schemes comprised in the state of the art. In this case, the security message is called "license". No particular right or data have to be previously stored into the receiving device to authorize the content key to be loaded into the descrambler. The content may be in a format suitable for the Pay-TV domain, for example a file in MPEG-2 Transport Stream format with DRM related metadata included in the transport stream. Such metadata generally indicates which protection system is used and which cryptographic parameters are included in the transport stream. The transport stream, being of an MPEG-2 format may of course include the EMM and ECM as described above. Equally, other file formats such as ISOBMFF are possible, where the equivalent of ECM content is provided through dedicated boxes such as the 'pssh' box.

In a system configured to function according to an MPEG DASH Standard for example, digital media content adapted for use in such a system may comprise fast-changing (short-lived) ECM, DRM license information and different representations of each of the contents included therein. An example of such a system would be one which is configured to operate within a pay-par-maximum-quality model. According to an embodiment of the present invention, provision is made for a user of such a system to have ready access to the necessary ECMs or CWs even when switching between representations occurs, different ECMs being required to decrypt the new representation every time a switch is made: this without experiencing any stalling of the playback of the content. This is particularly useful in systems which are configured to operate in a true dynamic adaptive streaming mode wherein at any time during the playing of a particular piece of content, the system could switch from a current representation to any other representation simply as a function of the available bandwidth for streaming the content. This is especially true if the user has paid for the maximum quality representation and therefore needs to have fast access to any of the other representations at any time during playing of the particular content. Under these and other similar example circumstances, a system in which an embodiment of the present invention is not deployed may experience stalling since new ECMs would have to be obtained and decrypted each time the dynamic adaptive streamer switches to another representation. It is worth noting that such a pay-per-quality model may include allowing free access to at least one of the quality representations, in which case the at least one of the quality representations may be on clear form (not encrypted).

According to an embodiment of the present invention, by including in each representation, not only the content key (e.g. ECM with CW) required for that particular representation, but all content keys (e.g. ECMs required for all of the representations available for dynamic adaptive streaming purposes) the user's reception device will thereby have access at all times to all content keys valid for all representations within the transport stream, as long as the user's reception device is configured to store and make proper reference to the content keys from whichever representation is currently being streamed.

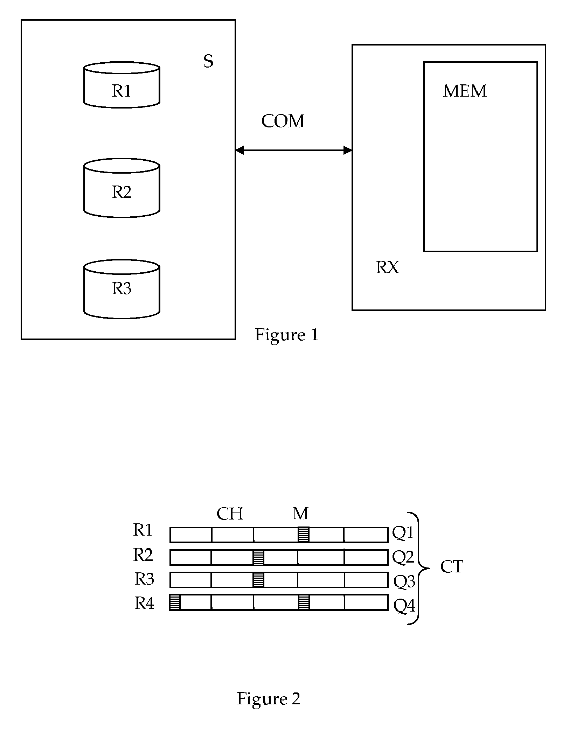

Figure 1 illustrates a system in which an embodiment of the present invention may be deployed. The system comprises a server for storing the media content. As is normal with any adaptive streaming server, the content is stored in a plurality of representations. The representations may be stored already in encrypted format or the encryption may be done just before content delivery. In either case, each representation is encrypted differently. The encryption of the content is at least in keeping with that which is commonly known in the field of Pay-TV, i.e. each representation is encrypted with content key (e.g. CW). The server comprises a server memory module for storing at least all of the representations of an encrypted content intended for use within a dynamic adaptive streaming environment. The server comprises a communication interface for transmitting the transport stream to a receiver. The system further comprises a receiver device for receiving an adaptive streaming transport stream comprising encrypted content. The receiver device comprises a receiver memory and a communication interface for receiving the transport stream. The system further comprises a communication channel between the server and the receiver device. The receiver device comprises an adaptive streaming controller which is configured to monitor the available bandwidth of the receiver and, as a function of this, to request from the server, chunks of content from the appropriate representation i.e. the representation whose size will allow for its content chunks to be received without stalling. By monitoring the available bandwidth on a regular basis, the adaptive streaming controller can provide dynamic adaptive streaming capability.

Within a given representation, the content is encrypted under at least one content key. In case of Pay-TV using control words, the lifetime of a control word is a crypto-period. The content is divided into a plurality of crypto-periods, with a different control word being used to encrypt the content in each crypto-period. This is also true for all the other representations. A control word which is valid for a given crypto-period in one representation will not be valid for the content in another representation during the same crypto-period.

According to an embodiment of the present invention, the receiver memory is configured, in a conventional fashion, to store all of the content keys (e.g. ECMs or all of the CWs within the ECMs) along with a reference to which representation each content key belongs, such information being conventionally available in the content file concerned (the representation). Advantageously, the receiver thereby has immediate access to the correct content key regardless of which representation requires to be decrypted at any given time. In this manner, seamless playback of the content is made possible independently of any switching from representation to representation due to the dynamic adaptive streaming function and the currently available bandwidth of the communication channel, without any stalling due to a lack of availability of the necessary decryption key during playback.

As is generally known in the Pay-TV industry, the transport stream comprises content and metadata, the metadata comprising the ECM among others. A receiving module with the correct authorisation rights (usually delivered by EMM) will be able to decrypt the ECM to get a control word. The control word will allow it to decrypt a predetermined number of packets (those fitting into one crypto-period as described above) of the media content. In practice however, it is common to include two control words in the ECM - one for the current crypto-period and one for the next crypto-period. Thanks to this, the decoder already knows in advance how to decrypt the content in the crypto-period following the current crypto-period. According to another variant of this practice the ECM also comprises the previous control word, which would be useful for reverse play to get back the CW for the previous crypto-period. In the case where a different file format is used (ISOBMFF for example), then instead of having a true ECM as is known in the pay-TV industry, provision is made to include metadata in the file (each representation) to provide for the same functionality as is provided by the ECM described above.

Figure 2 depicts a piece of digital media content (CT) organised in a way which is compatible with embodiments of the present invention. The digital media content (CT) is represented by a plurality of different representations (R1, R2, R3, R4). Each representation is encoded in such a way that the same content is represented by more or less bytes of information, making some representations more or less suitable than others for transmission depending on momentary available transmission bandwidth. Each representation is arranged in a plurality of chunks (CH) of the content, the chunks being aligned from one representation to another to allow for convenient switching from one representation to the next without losing content, jittering or stalling. One or more chunks within each representation comprises metadata (M) comprising information allowing for a decryption key to be derived, the decryption key allowing for at least some of the chunks from the representation to be decrypted. The decryption key may be short-lived in that a first decryption key decrypts a first subset of the chunks within the representation while a different decryption key decrypts a further subset of the chunks within the representation. This is known as key rotation in the domain of live adaptive streaming broadcast. Each new key can be derived from a new piece of metadata comprised within an appropriate chunk within the representation. An example of a short-lived decryption key is shown for representation R4, where two different pieces of metadata are to be found within the representation. The metadata may take the form of an ECM as is generally used in the domain of pay-TV. Any other type of metadata is also possible as long as it allows for the key to be derived by an authorised receiver.

According to an embodiment of the present invention, where a plurality of representations of a same content are available for streaming, one representation comprises at least one ECM (or ECM-like metadata as described above) associated with that representation, the ECM comprising a current CW and a next control word and any other representation comprises at least one other ECM associated with another representation, the ECM comprising another current CW and another next CW, different from the control words associated with the former two. In this manner, even if a crypto-period boundary coincides with a chunk boundary (a point where the receiver switches from on representation to another) the receiver will always have at least one valid control words for both representations. According to the embodiment then, all representations of the content comprise valid control words for all content in all data packets at all times, thereby guaranteeing playback without stalling.

Embodiments of the present invention find particular use when the encrypted content is organised in such a way that the longevity of the control word is related to the length of a chunk of a particular representation of content. As mentioned before, in a streaming environment it is usual for chunks in different representations of a particular content to be aligned. It can be said therefore that chunks in so-called parallel representations of a particular content have the same length in that they represent the same playback duration. A chunk therefore represents a predetermined length of playback time.

In some systems the encrypted content may be organised as a plurality of parallel representations, each representation comprising a plurality of chunks of encrypted content, the plurality of chunks in each representation being aligned with each other such that a change from one representation to another during playback may be made without breaking continuity. On the other hand, not all chunks include an ECM (or ECM-like metadata). Since the content in each representation is encrypted, and since the type of encryption used to satisfy the aforementioned pay-per-quality model requires that each representation be encrypted using a different key, even if the chunks are properly aligned this will not guarantee that when changing from one representation to another the correct decryption key will be ready. In keeping with common Pay-TV practices, the ECMs which have the control words (decryption keys) are repeated at intervals. This means that several chunks in a stream within a representation will include a repeat of a previous ECM, but not all chunks will have the ECM within it. Furthermore, in keeping with common practice, the ECMs are changed at intervals known as crypto-periods. A particular ECM therefore has a duration through which it remains valid before a different ECM then becomes valid. A particular ECM can be repeated at intervals during the crypto-period. In practice, for an ECM having a duration of validity of between 1 and 30 seconds, the ECM may be repeated at 50ms intervals for example. It can be said then that the ECMs are repeated at a large frequency with respect to the duration of their validity. In some systems the chunk comprising the ECM in one representation may not be aligned in such a way that the corresponding chunk in another representation is also the one which comprises its ECM: in other words the ECMs may be misaligned. Changing from one representation to the next in a system thus described will therefore produce further problems for ensuring that the correct key is available at the correct time.

According to an embodiment of the present invention, provision is made to be able to conveniently handle such scenarios where not all chunks within a representation comprise an ECM. According to this embodiment it is arranged for each representation to comprise the current ECM for all representations. Accordingly, a chunk in any given representation, which comprises an ECM for decrypting that representation, also comprises the ECMs for decrypting the other representations of the content. A device for decrypting such content therefore comprises a memory for storing the respective ECMs by representation such that it can quickly access the proper ECM (or control word resulting from a decrypted ECM) for whichever representation is currently being used.

According to another embodiment, as well as having the keys for all representations available in every representation, it is arranged that each chunk in each representation comprises the keys for all representations. In this manner it is easy to provide seamless switching from one representation to another.

## Claims

1. A method for allowing decryption of a digital media content, the digital media content provided via a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, at least one chunk within the first of the thus-encrypted representations further comprising information to allow the plurality of chunks within the first of the encrypted representations to be decrypted, the method comprising:
further including, in the first of the thus-encrypted representations, still further information to allow decryption of a plurality of chunks within at least the second of the thus-encrypted representations.

2. The method according to claim 1, wherein at least one chunk within the second of the thus-encrypted representations further comprises information to allow the plurality of chunks within the second of the encrypted representations to be decrypted, the method further comprising:
further including, in the second of the thus-encrypted representations, still further information to allow decryption of a plurality of chunks within at least the first of the thus-encrypted representations.

3. The method according to claim 2, wherein all from the plurality of representations are thus-encrypted, all of the thus-encrypted representations being encrypted under different keys from one another, at least one chunk within all of the remaining representations further comprising information to allow the plurality of chunks within the respective encrypted representation to be decrypted, the method further comprising:
further including, in each of the respective remaining thus-encrypted representations, still further information to allow decryption of the pluralities of chunks within all of the other thus-encrypted representations.

4. The method according to any of the preceding claims, wherein the still further information is comprised within a chunk which already comprises information to allow decryption of a plurality of chunks.

5. The method according to claim 4, when depending from claim 1, wherein a plurality from the plurality of representations is further encrypted in that a further plurality of chunks within the respective representation is encrypted under a further key, a first of the thus further encrypted representations being further encrypted under a different further key from at least a second of the thus further encrypted representations, at least one chunk from the further plurality of chunks within the first of the thus further encrypted representations further comprising further information to allow the further plurality of chunks within the first of the thus further encrypted representations to be decrypted, the method further comprising:
further including, in the at least one further chunk comprising the further information to allow the further plurality of chunks within the first of the further encrypted representations to be decrypted, yet further information to allow decryption of a further plurality of chunks within at least the second of the thus further encrypted representations.

6. A method for decrypting a digital media content, the digital media content provided via a set of a plurality of representations, each representation comprising a plurality of chunks, each chunk within its respective representation comprising part of the digital media content represented at a given quality, the given quality being different from one representation to another, a first of the encrypted representations being encrypted under a different key from at least a second of the encrypted representations, the method comprising:
extracting a first information from at least one chunk from the first of the encrypted representations, the first information related to the first of the encrypted representations;
storing the first information in a memory;
extracting a further information from the at least one chunk from the first of the encrypted representations, the further information related to the second of the encrypted representations; and
storing the further information in the memory.

7. The method according to claim 6, further comprising:
decrypting a plurality of chunks from the first of the thus-encrypted representations using the first information.

8. The method according to either of claims 6 or 7, further comprising:
decrypting a plurality of chunks from the second of the thus-encrypted representations using the further information.

9. An apparatus for encrypting digital media content, the digital media content comprising a set of a plurality of representations, each representation comprising a plurality of chunks, each chunk within its respective representation comprising part of the digital media content represented at a given quality, the given quality being different from one representation to another, the apparatus comprising:
an encryption module for encrypting at least one chunk from each of a plurality of the representations, said encryption being done such that the chunks from at least a first representation is encrypted under a different key from the chunks from at least a second representation; and
an insertion module configured to insert into each encrypted representation, information to allow decryption of its relative encrypted chunks;
**characterised in that** the insertion module is further configured to insert into at least one encrypted representation, further information to allow decryption of the encrypted chunks from at least one other encrypted representation.

10. The apparatus according to claim 9, wherein the insertion module is further configured to insert into each of the respective remaining encrypted representations, still further information to allow decryption of the encrypted chunks within all of the other encrypted representations.

11. An apparatus for decrypting a digital media content, the digital media content being provided via a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, the apparatus comprising:
a receiver for receiving the content;
an adaptive streaming controller to monitor the bandwidth capability of the receiver and to request the server to send chunks from one or other of the representations depending on the bandwidth capability;
a memory for storing decryption keys; and
a decryption module for decrypting chunks of content;
the apparatus configured to derive a first key from a piece of information extracted from a chunk from a first representation from the plurality of representations and to use the first key to decrypt at least said chunk from the first representation;
the apparatus **characterised in that** it is further configured at least to derive a second key from a further piece of information extracted from said chunk and to store either the further piece of information or a value derived from the further piece of information in the memory.

12. The apparatus according to claim 11, wherein it is further configured to use the second key to decrypt a plurality of chunks from a second from the plurality of representations.

13. The apparatus according to claim 12, wherein it is further configured to derive and store still further keys from still further pieces of information from a chunk from each of the remaining representations and to use each of the respective keys to decrypt each of their respective representations.

14. A database of a digital media content, the database comprising a set of a plurality of representations, each representation comprising a plurality of chunks, each chunk within its respective representation comprising part of the digital media content represented at a given quality, the given quality being different from one representation to another, a plurality from the plurality of representations being encrypted in that a plurality of chunks within the respective representation is encrypted under a key, a first of the thus-encrypted representations being encrypted under a different key from at least a second of the thus-encrypted representations, at least one chunk within the first of the thus-encrypted representations further comprising information to allow the plurality of chunks within the first of the encrypted representations to be decrypted;
**characterised in that**:
at least the first encrypted representation, further includes information to allow decryption of the plurality of chunks within at least one other encrypted representation.

15. The database of digital media content according to claim 14, wherein all of the encrypted representations comprises information to allow decryption of the chunks from all of the remaining representation.
